# EUROPEAN PATENT APPLICATION

(11) **EP 1 603 370 A1**
(43) Date of publication of application: **07.12.2005**
(21) Application number: 05011842.1
(22) Date of filing: 01.06.2005
(51) Int. Cl.: H05B 33/22

(54) **Area lighting unit**

(30) Priority: 02.06.2004 JP 2004164736
(71) Applicant: KABUSHIKI KAISHA TOYOTA JIDOSHOKKI, Kariya-shi, Aichi-ken (JP)
(72) Inventor: Koike, Shuji, Kariya-shi Aichi-ken (JP); Ishikawa, Haruyuki, Kariya-shi Aichi-ken (JP); Takeuchi, Norihito, Kariya-shi Aichi-ken (JP); Yoshida, Mikio, Kariya-shi Aichi-ken (JP); Tsuzaka, Masanori, Kariya-shi Aichi-ken (JP)
(74) Representative: TBK-Patent

(57) **Abstract**

An area lighting unit has an electroluminescent device, a light scattering portion on a side of a light exit surface of the electroluminescent device, and a light converging portion on a side of a light exit surface of the light scattering portion. The light converging portion includes first and second layered optical sheets, each having a planar light incidence portion through which light enters and a light exit portion through which the light exits. The light exit portion of each optical sheet forms parallel prismatic protrusions, each having a vertex angle of 90 degrees to 105 degrees. The optical sheets each are so arranged that the light incidence portion is oriented to the electroluminescent device and a direction in which the protrusions of the first optical sheet are arranged is perpendicular to a direction in which the protrusions of the second optical sheet are arranged.

## Description

### TECHNICAL FIELD

The present invention relates to an area lighting unit which is provided with an electroluminescent device.

Japanese unexamined patent publications No. 8-83688, No. 2000-277266 and No. 2003-109747 disclose that an area lighting unit, which emits light in planar form from an electroluminescent device, or EL device, as a source of luminescence, is, for example, used as a backlight of the liquid crystal display.

The publication No. 8-83688 discloses that the unit is provided with a light scattering portion outside the light exit surface of the organic EL device. The light scattering portion is formed by adhering a lens sheet on the transparent substrate for mounting the organic EL device, by frosting the surface of the transparent substrate, or by dispersing opaque particles within the transparent substrate. The light scattering portion is to prevent a cathode (or mirror electrode), which is a part of the organic EL device, from being viewed as a mirror surface by reflecting light which enters from the outside.

The publication No. 2000-277266 discloses that the unit is provided with a light converging layer on the light exit surface of the transparent substrate which mounts thereon the organic EL device. The light converging layer includes a plurality of microscopic parallel prisms. The light converging layer is to converge light which exits from the organic EL device for enhancing directivity toward the front of the device.

The units disclosed in the publications No. 8-83688 and No. 2000-277266 are insufficient to enhance the front brightness of light emitted from the organic EL device toward the front of the area lighting unit, and do not sufficiently use light emitted from the organic EL device. Therefore, a large amount of electrical power consumption is required for retaining higher front brightness.

The publication No. 2003-109747 discloses the device that a light diffusing portion is provided on the transparent substrate which mounts thereon the organic EL device and also discloses that a light converging portion is provided on a light exit side of the light diffusing portion. The light scattering portion is formed by dispersing a light scattering material, which has a refractive index different from a transparent sheet, within the transparent sheet, or by dispersing the light scattering material, which has a refractive index different from the transparent substrate, within the transparent substrate. The light converging portion includes a lens having a shape for converging light which exits from the light diffusing portion. The light scattering portion is to prevent light emitted from the organic EL device from total reflection at the interface between the surface of the transparent substrate and air. The light converging portion is to enhance front brightness by converging light which exits from the light diffusing portion.

The unit disclosed in the publication No. 2003-109747 is provided with a light diffusing portion and a light converging portion that utilizes light emitted from the organic EL device more efficiently than the units disclosed in the publications No. 8-83688 and No. 2000-277266 and requires less power for ensuring high front brightness than the units disclosed in the publications No. 8-83688 and No. 2000-277266.

However, the publication No. 2003-109747 just discloses the light converging portion formed by a lens having a shape which is designed for converging light which exits from the light diffusing portion. In other words, the specific structure of the light converging portion appropriate for improving the utilization rate of light emitted from the organic EL device is not disclosed at all.

The present invention addresses an area lighting unit which has a high utilization rate and front brightness of light emitted from the EL device. It is noted that the language "front brightness" means the brightness of the normal direction to the light exit surface of an EL device.

### SUMMARY

In accordance with the present invention, an area lighting unit has an electroluminescent device, a light scattering portion and a light converging portion. The light scattering portion is provided on a side of a light exit surface of the electroluminescent device. The light converging portion is provided on a side of a light exit surface of the light scattering portion. The light converging portion includes first and second optical sheets which are layered, each having a planar light incidence portion through which light enters and a light exit portion through which the light exits. The light exit portion of each optical sheet forms a plurality of prismatic protrusions arranged in a parallel relation to each other. Each protrusion has a vertex angle of 90 degrees to 105 degrees. The first and second optical sheets each are so arranged that the light incidence portion is oriented to the electroluminescent device and a direction in which the protrusions of the first optical sheet are arranged is perpendicular to a direction in which the protrusions of the second optical sheet are arranged.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1A is a side schematic view of an area lighting unit according to a first preferred embodiment of the present invention;
FIG. 1B is an exploded perspective view of the area lighting unit according to the first preferred embodiment of the present invention;
FIG. 1C is a partial side view of a prism sheet according to the first preferred embodiment of the present invention;
FIG. 1D is a partial side view of a prism sheet according to the first preferred embodiment of the present invention; and
FIG. 2 is a graph showing a relation between a vertex angle of a protrusion of the prism sheet and a ratio of front brightness.

### DETAILED DESCRIPTION OF THE PREFERRED EMBODIMENTS

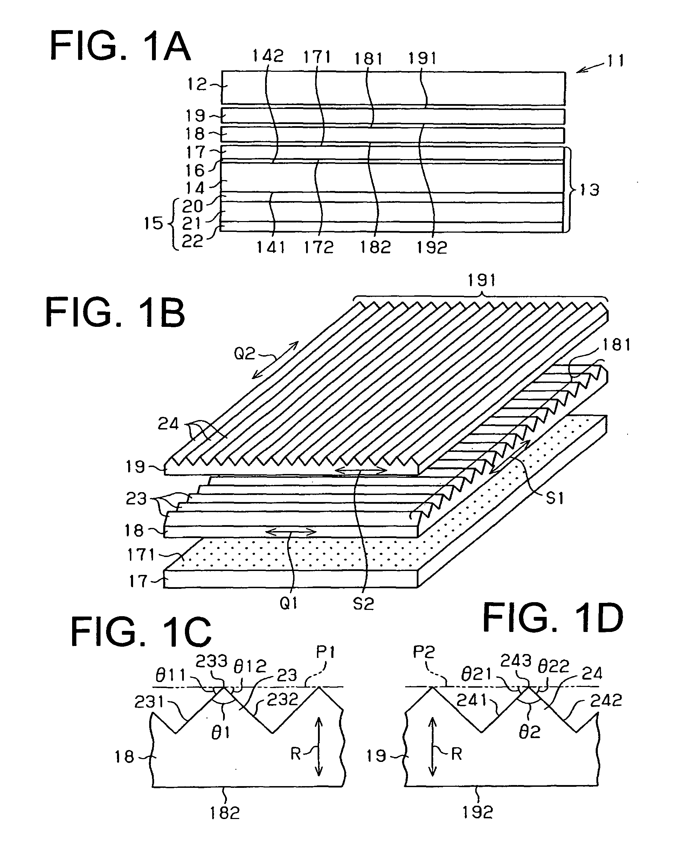

The following will describe a backlight of a liquid crystal display according to a first preferred embodiment of the present invention with reference to FIGS. 1A through 2.

As shown in FIG. 1A, a liquid crystal display 11 includes a liquid crystal panel 12 and a backlight 13, or area lighting unit, arranged on the back side (the surface opposite to the display surface) of the liquid crystal panel 12. The backlight 13 includes a transparent substrate 14, an organic electroluminescent device 15 provided on the light incidence surface 141 of the transparent substrate 14, a light scattering film 17, or a light scattering portion, adhered to the light exit surface 142 of the transparent substrate 14 through an adhesive layer 16, and two prism sheets 18, 19, or optical sheets, provided on the light exit surface 171 of the light scattering film 17. The prism sheets 18, 19 serve as a light converging portion in this embodiment. The light scattering film 17 is contiguous to the prism sheet 18. The prism sheet 18 is contiguous to the prism sheet 19. The transparent substrate 14, the adhesive layer 16, the light scattering film 17 and the prism sheets 18, 19 are made of a material having a relatively high light transmittance.

The organic electroluminescent device 15, or the organic EL device, includes a first electrode 20, an organic electroluminescent layer 21, or organic EL layer, and a second electrode 22, which are layered on the light incidence surface 141 of the transparent substrate 14 in this order. The organic EL device 15 is coated with a protection layer (not shown) which prevents penetration of moisture and oxygen to avoid exposing the organic EL layer 21 to ambient air.

The first electrode 20 is made of a transparent and electrically conductive material, such as indium tin oxide. The organic EL layer 21 forms a three-layer structure including a hole transport layer, a luminescent layer and an electron injection layer in the order from the side of the first electrode 20, or forms a four-layer structure including a hole transport layer, a luminescent layer, an electron transport layer and an electron injection layer. The organic EL layer 21 is formed to emit white light. The second electrode 22 is made of metal having light reflectivity, such as aluminum. The second electrode 22 is a cathode. The first electrode 20 is an anode. When voltage is applied between the first electrode 20 and the second electrode 22, the organic EL layer 21 emits white light.

The light exit surface 171 of the light scattering film 17 is roughened to form a rough surface which can scatter light. The surface roughness of the light exit surface 171 is set so that Ra (arithmetic mean roughness) ranges from 0.6 µ m to 1 µm. The light scattering film 17 is adhered to the transparent substrate 14 through the adhesive layer 16 so that the light incidence surface 172, which is opposite to the rough light exit surface 171, faces the light exit surface 142 of the transparent substrate 14.

The material of the adhesive layer 16 will be selected so that the adhesive layer 16 has a refractive index close to that of the transparent substrate 14 and that of the light scattering film 17.

As shown in FIG. 1 B, a plurality of prismatic protrusions 23, 24 are respectively formed on one side of prism sheets 18, 19 and arranged in parallel rows. The parallel arranged protrusions 23 form the light exit portion 181 of the prism sheet 18. The parallel arranged protrusions 24 form the light exit surface 191 of the prism sheet 19. The opposite sides of the light exit portions 181, 191 of the prism sheets 18, 19 are planar light incidence portions 182, 192, as shown in FIG. 1A. The light incidence portion 182 of the prism sheet 18 faces the light exit surface 171 of the light scattering film 17. The light incidence portion 192 of the prism sheet 19 faces the light exit portion 181 of the prism sheet 18. Thus, the light incidence portions 182, 192 are oriented to the organic EL device 15.

As shown in FIG. 1C, the protrusions 23 of the prism sheet 18 each form a pair of planar inclined surfaces 231, 232. The connections 233 between the inclined surfaces 231, 232 (which are located away from the light incidence portion 182) are included in the same plane P1, and each protrusion 23 has the same height. The hypothetical plane P1 is in a parallel relation to the planar light incidence portion 182 in this embodiment. The vertex angles θ1 between the inclined surfaces 231, 232 (the vertex angles at the connections 233) are the same, and each protrusion 23 has a cross-section of the same shape and size isosceles triangle which is taken by the plane perpendicular to the longitudinal direction (indicated by the arrow Q1 in FIG. 1 B). The angle θ11 which the plane P1 makes with the inclined surface 231 is substantially equal to the angle θ12 which the plane P1 makes with the surface 232.

As shown in FIG. 1 D, the protrusions 24 of the prism sheet 19 each form a pair of planar inclined surfaces 241, 242. The connections 243 between the inclined surfaces 241, 242 (which are located away from the light incidence portion 192) are included in the same plane P2, and each protrusion 24 has the same height. The hypothetical plane P2 is in a parallel relation to the planar light incidence portion 192 in this embodiment. The vertex angles θ2 between the inclined surfaces 241, 242 (the vertex angles at the connections 243) are the same, and each protrusion 24 has a cross-section of the same shape and size isosceles triangle which is taken by the plane perpendicular to the longitudinal direction (indicated by the arrow Q2 in FIG. 1 B). The angle θ21 which the plane P2 makes with the inclined surface 241 is substantially equal to the angle θ22 which the plane P2 makes with the surface 242.

In this embodiment, the vertex angle θ1 of the prismatic protrusions 23 are substantially equal to the vertex angle θ2 of the prismatic protrusions 24.

Also, in this embodiment, the cross-section of the protrusions 23 of the prism sheet 18 has the same shape and size as that of the protrusions 24 of the prism sheet 19. The pitch of the protrusions 23 is the same as the pitch of the protrusions 24.

The prism sheet 18 is provided on the light exit surface 171 of the light scattering film 17 so that the light incidence portion 182 contacts and faces the light exit surface 171 of the light scattering film 17. The prism sheet 19 is provided on the light exit portion 181 of the prism sheet 18 so that the light incidence portion 192 contacts and faces the light exit portion 181 of the prism sheet 18. A pair of the prism sheets 18, 19 is so arranged that the direction in which the protrusions 23 of one prism sheet 18 extend is perpendicular to the direction in which the protrusions 24 of the other prism sheet 19 extend. Accordingly, the direction in which the protrusions 23 are arranged in the prism sheet 18 (which is indicated by the arrow S in FIG. 1 B) is perpendicular to the direction in which the protrusions 24 are arranged in the prism sheet 19 (which is indicated by the arrow S2 in FIG. 1 B).

The following will describe the operation of a backlight 13 and the prism sheets 18, 19.

Light emitted from the organic EL device 15 passes through the transparent substrate 14 and the adhesive layer 16 and then enters into the light scattering film 17 through the light incidence surface 172.

When the refractive index of the adhesive layer 16 is set close to the refractive indices of the transparent substrate 14 and the light scattering film 17, light emitted from the organic EL device 15 enters into the light scattering film 17 with little total reflection at the interface between the transparent substrate 14 and the adhesive layer 16 and at the interface between the adhesive layer 16 and the light scattering film 17. Thus, the utilization rate of light is improved.

Then, light which has entered into the light scattering film 17 exits outside the light scattering film 17 through the light exit surface 171. At the same time, light which is to travel in the direction to be totally reflected in excess of critical angle if the light scattering film 17 had a planar light exit surface 171 will partially exit outside through the light exit surface 171 due to the rough light exit surface 171. Light reflected on the light exit surface 171 is reflected on the second electrode 22 and enters into the light scattering film 17 again, and then exits outside through the light exit surface 171. Accordingly, the utilization rate of light is further improved.

Light which has exited from the light scattering film 17 enters into the prism sheet 18 through the light incidence portion 182 of the prism sheet 18. Since the light exit surface 171 of the light scattering film 17 is roughened, the light exit surface 171 does not closely contact the light incidence portion 182 of the prism sheet 18, and air occupies a gap between the light exit surface 171 and the light incidence portion 182. Since the refractive index of air is smaller than that of the prism sheet 18, light which has entered into the prism sheet 18 through the light incidence portion 182 is refracted to come close to the normal direction to the light incidence portion 182 at the interface between air and the light incidence portion 182.

Light which has entered into the prism sheet 18 and has reached the light exit portion 181 partially exits outside the prism sheet 18 through the inclined surfaces 231, 232 which cooperatively form the protrusion 23. Since the inclined surfaces 231, 232 both are exposed to air, the light which exits from the prism sheet 18 through these surfaces 231, 232 is so refracted that a component of the light which travels along the hypothetical plane perpendicular to the longitudinal direction Q1 of the protrusions 23 (a component of the light in the direction S1 in which the protrusions 23 are arranged) comes close to the normal direction to the light incidence portion 182.

The remainder of light which has reached the light exit portion 181 is totally reflected on the inclined surfaces 231, 232. Totally reflected light is reflected on the rough light exit surface 171 of the light scattering film 17 or the second electrode 22 of the organic EL device 15, and then enters into the prism sheet 18 again. At the same time, light is refracted on the rough light exit surface 171, with the result that more light can exit from the prism sheet 18.

Light which has exited from the prism sheet 18 enters into the prism sheet 19 through the light incidence portion 192 of the prism sheet 19. In this case, as well as when light enters into the prism sheet 18, light is refracted to come close to the normal direction to the light incidence portion 192.

Light which has entered into the prism sheet 19 and has reached the light exit portion 191 partially exits outside the prism sheet 19 through the inclined surfaces 241, 242 which cooperatively form the protrusion 24. Since the inclined surfaces 241, 242 both are exposed to air, the light which exits from the prism sheet 19 through these surfaces 241, 242 is so refracted that a component of the light which travels in the hypothetical plane perpendicular to the longitudinal direction Q2 of the protrusions 24 (a component of the light in the direction S2 in which the protrusions 24 are arranged) comes close to the normal direction to the light incidence portion 192.

The remainder of light which has reached the light exit portion 191 is partially totally reflected on the inclined surfaces 241, 242. The totally reflected light is reflected on the interface between the light incidence portion 192 and air, interface between air and the prism sheet 18, interface between the light incidence portion 182 and air, rough light exit surface 171 of the light scattering film 17 or second electrode 22 of the organic EL device 15, and then enters into the prism sheet 19 again. Light which has entered again into the prism sheet 19 partially exits from the prism sheet 19.

Since the direction S1 in which the protrusions 23 are arranged is perpendicular to the direction S2 in which the protrusions 24 are arranged, the majority of the light which has exited from the organic EL device 15 is converged toward the front direction by passing through the prism sheet 18 and the prism sheet 19.

Light which has exited through the light exit portion 191 enters into the liquid crystal panel 12. A user of the liquid crystal display 11 views the screen of the liquid crystal panel 12 using the light which has exited from the backlight 13.

According to the first preferred embodiment, the following advantages are obtained.
(1) The refractive index of the adhesive layer 16 is close to that of the transparent substrate 14 and the light scattering film 17. Therefore, light emitted in any directions from the organic EI device 15 is hardly totally reflected at the interface between the transparent substrate 14 and the adhesive layer 16 and interface between the adhesive layer 16 and the light scattering film 17, and then reaches the light scattering film 17. Accordingly, the utilization rate of light emitted from the backlight 13 is improved.
(2) Since the light exit surface 171 of the light scattering film 17 is roughened, more light can be emitted outside the light scattering film 17 as compared with a planar light exit surface 171. Thus, the light of the backlight 13 is further efficiently emitted.
(3) The light which has exited from the light scattering film 17 passes through the prism sheet 18 and the prism sheet 19, with the result that the light is converged so that its traveling direction comes close to the normal direction to the light exit surface 142 of the transparent substrate 14. Thus, the front brightness of the backlight 13 is improved.
(4) Since light from the organic EL device 15 passes through the light scattering film 17 and then passes through the prism sheet 18 and the prism sheet 19, the light in which its traveling direction is dispersed by the light scattering film 17 is not directly emitted but converged by the prism sheet 18 and the prism sheet 19 for improving the efficiency of light emission. Thus, the front brightness of the backlight 13 may be improved.
(5) The light scattering film 17 is adhered to the transparent substrate 14 of the organic EL device 15. Therefore, air does not exist between the light scattering film 17 and the transparent substrate 14, so that the light emitted from the organic EL device 15 may efficiently be transmitted to the light scattering film 17.
(6) The organic EL device 15 requires a lower voltage than an inorganic electroluminescent device for light emission. Therefore, it is an appropriate light source for the backlight of the liquid crystal display 11.

The followings will describe examples of an area lighting unit.

### EXAMPLE 1

In the above preferred embodiment, the protrusions 23, 24 of the respective prism sheets 18, 19 each have a vertex angle of 90 degrees. The light scattering film 17 has haze of 94 percent and a total transmittance of 82 percent.

### EXAMPLE 2

The protrusions 23, 24 of the respective prism sheets 18, 19 each have a vertex angle of 105 degrees. The other components are same to those of the example 1.

### EXAMPLE 3

The protrusions 23, 24 of the respective prism sheets 18, 19 each have a vertex angle of 65 degrees. The other components are same to those of the example 1.

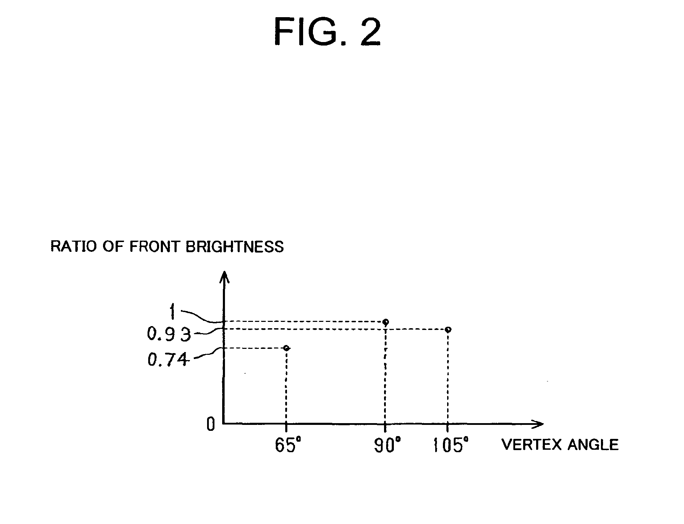

To the examples 1 through 3, in a state where electric current supplied to the organic EL device 15 is constant (that is, the intensity of emission of the organic EL device 15 is also constant.), the front brightness at the middle of the backlight 13 (the brightness of the light exit surface 142 of the transparent substrate 14 in the normal direction) was measured. The results are shown in FIG. 2. In FIG. 2, the vertical scale represents a relative front brightness where the front brightness of the example 1 is 1.00. The relative front brightness of example 2 and example 3 are 0.93 and 0.74, respectively.

According to these results, when the vertex angle of the protrusions 23, 24 ranges between 90 degrees and 105 degrees, the relative front brightness to the front brightness when the vertex angle is 90 degrees is equal to or more than 0.9. When the vertex angle ranges between 65 degrees and 105 degrees, the relative front brightness is equal to or more than 0.7.

### EXAMPLES 4 through 11

The light scattering films 17 of the examples 4 through 11 respectively have haze of 30 percent, 47 percent, 66 percent, 86 percent, 88 percent, 90 percent, 92 percent and 95 percent, respectively. The other components are same to those of the example 1.

In the examples 1 and 4 through 11, in a state where electric current supplied to the organic EL device 15 is constant, the front brightness at the center of the backlight 13 (the brightness of the light exit surface 142 of the transparent substrate 14 in the normal direction) was measured. The results are shown in TABLE 1. In TABLE 1, a ratio of front brightness represents a relative front brightness where the front brightness of example 1 is one.

**TABLE 1**

| | HAZE (%) | RATIO OF FRONT BRIGHTNESS |
|---|---|---|
| EXAMPLE 1 | 94 | 1.00 |
| EXAMPLE 4 | 30 | 0.73 |
| EXAMPLE 5 | 47 | 0.79 |
| EXAMPLE 6 | 66 | 0.86 |
| EXAMPLE 7 | 86 | 0.93 |
| EXAMPLE 8 | 88 | 0.97 |
| EXAMPLE 9 | 90 | 0.98 |
| EXAMPLE 10 | 92 | 0.99 |
| EXAMPLE 11 | 95 | 0.87 |

According to these results, when the haze of the light scattering film 17 ranges between 86 percent and 94 percent, the relative front brightness (a ratio of front brightness) to the front brightness when the haze is 94 percent is equal to or more than 0.9 percent. When the haze ranges between 47 percent and 95 percent, a ratio of front brightness is equal to or more than 0.75.

Thus, front brightness varies depending on haze because a rate of light emitted toward the prism sheet 18 to the light, which has entered into the light scattering film 17, reduces when haze is small. On the other hand, the light is largely scattered when emitted through the light scattering film 17 with a large haze and is not efficiently converged.

### EXAMPLES 12 through 21

In examples 12 through 21, the total transmittance to the front light is 46 percent, 50 percent, 58 percent, 75 percent, 76 percent, 87 percent, 88 percent, 93 percent, 97 percent and 99 percent, respectively. The other components are same to those of the example 1.

In the examples 1 and 12 through 21, in a state where electric current supplied to the organic EL device 15 is constant, the front brightness at the center of the backlight 13 (the brightness of the normal direction to the light exit surface 142 of the transparent substrate 14) was measured. The results are shown in TABLE 2. In TABLE 2, a ratio of front brightness represents a relative front brightness where the front brightness of example 1 is one.

**TABLE 2**

| | TRANSMITTANCE (%) | RATIO OF FRONT BRIGHTNESS |
|---|---|---|
| EXAMPLE 1 | 82 | 1.00 |
| EXAMPLE 12 | 46 | 0.81 |
| EXAMPLE 13 | 50 | 0.86 |
| EXAMPLE 14 | 58 | 0.91 |
| EXAMPLE 15 | 75 | 0.96 |
| EXAMPLE 16 | 76 | 0.99 |
| EXAMPLE 17 | 87 | 0.99 |
| EXAMPLE 18 | 88 | 0.98 |
| EXAMPLE 19 | 93 | 0.97 |
| EXAMPLE 20 | 97 | 0.94 |
| EXAMPLE 21 | 99 | 0.91 |

According to these results, when the total transmittance to the front light ranges between 75 percent and 93 percent, the relative front brightness to the front brightness when the total transmittance to the front light is 82 percent is equal to or more than 0.95. When the total transmittance to the front light ranges between 58 percent and 99 percent, the relative front brightness is equal to or more than 0.9.

The present invention is not limited to the embodiment described above but may be modified into the following alternative embodiments.
(1) In the first preferred embodiment, the vertex angle θ1 of the protrusions 23 of the prism sheet 18 may be set different from the vertex angle θ2 of the protrusions 24 of the prism sheet 19. Depending on characteristics of the organic EL device 15, θ1 and θ2 may be adjusted to have desired characteristics as the backlight 13.
(2) In the first preferred embodiment, the angle θ11 may be different from the angle θ12, or the angle θ21 may be different from the angle θ22. Depending on desired characteristics, the angles may be adjusted. For example, when the brightness is required to be maximum at a direction different from the normal direction to the light exit surface 142 of the transparent substrate 14, it may be achieved by adjusting the angles θ11, θ12, θ21 and θ22.
(3) The light scattering film 17 may be omitted, and the light exit surface 142 of the transparent substrate 14 may be roughened to serve as the light scattering portion.
(4) The light scattering film 17 may be omitted, and a scattering material may be dispersed in the transparent substrate 14 to serve as the light scattering portion.
(5) Instead of the organic EL device 15, an inorganic electroluminescent device may be used.

Therefore, the present examples and embodiments are to be considered as illustrative and not restrictive, and the invention is not to be limited to the details given herein but may be modified within the scope of the appended claims.

An area lighting unit has an electroluminescent device, a light scattering portion on a side of a light exit surface of the electroluminescent device, and a light converging portion on a side of a light exit surface of the light scattering portion. The light converging portion includes first and second layered optical sheets, each having a planar light incidence portion through which light enters and a light exit portion through which the light exits. The light exit portion of each optical sheet forms parallel prismatic protrusions, each having a vertex angle of 90 degrees to 105 degrees. The optical sheets each are so arranged that the light incidence portion is oriented to the electroluminescent device and a direction in which the protrusions of the first optical sheet are arranged is perpendicular to a direction in which the protrusions of the second optical sheet are arranged.

## Claims

1. An area lighting unit having an electroluminescent device, a light scattering portion provided on a side of a light exit surface of the electroluminescent device and a light converging portion provided on a side of a light exit surface of the light scattering portion, **characterized in that**:
the light converging portion includes first and second optical sheets which are layered, each having a planar light incidence portion through which light enters and a light exit portion through which the light exits, **in that** the light exit portion of each optical sheet forms a plurality of prismatic protrusions arranged in a parallel relation to each other and each having a vertex angle of 90 degrees to 105 degrees, and **in that** the first and second optical sheets each are so arranged that the light incidence portion is oriented to the electroluminescent device and a direction in which the protrusions of the first optical sheet are arranged is perpendicular to a direction in which the protrusions of the second optical sheet are arranged.

2. The area lighting unit according to claim 1, wherein the light scattering portion has a haze of 47 percent to 95 percent.

3. The area lighting unit according to claim 2, wherein the light scattering portion has a haze of 66 percent to 95 percent.

4. The area lighting unit according to claim 3, wherein the light scattering portion has a haze of 86 percent to 94 percent.

5. The area lighting unit according to any one of claims 1 through 4, wherein the light scattering portion has a total transmittance of 58 percent to 99 percent to front light.

6. The area lighting unit according to claim 5, wherein the light scattering portion has a total transmittance of 75 percent to 93 percent to front light.

7. The area lighting unit according to any one of claims 1 through 6, wherein the electroluminescent device is provided on a transparent substrate, wherein the light scattering portion is a light scattering film whose light exit surface is roughened, and wherein the light scattering film is adhered to the transparent substrate so that a light incidence surface opposite to the light exit surface faces a light exit surface of the transparent substrate.

8. The area lighting unit according to any one of claims 1 through 7, wherein the electroluminescent device is an organic electroluminescent device.

9. The area lighting unit according to any one of claims 1 through 8, wherein the light incidence portion of the first optical sheet is contiguous to the light scattering portion and faces the light exit surface of the light scattering portion, and wherein the light exit portion of the first optical sheet faces the light incidence portion of the second optical sheet.
